# EUROPEAN PATENT APPLICATION

(11) **EP 4 711 167 A1**
(43) Date of publication of application: **18.03.2026**
(21) Application number: 25315319.1
(22) Date of filing: 09.09.2025
(51) Int. Cl.: B60K 1/04, B60L 50/60, B62D 31/02

(54) **PUBLIC TRANSPORT VEHICLE**

(30) Priority: 13.09.2024 IT 202400020452
(71) Applicant: IVECO FRANCE S.A.S., 69200 Vénissieux (FR)
(72) Inventor: Curtat, Arnaud, 69200 VENISSIEUX (FR); Tran, Steven, 69200 VENISSIEUX (FR); Kawchale, Omkar, 69200 VENISSIEUX (FR)
(74) Representative: Studio Torta S.p.A.

(57) **Abstract**

A vehicle (1) for public transport comprising a body (2), which is movable on the ground by means of ground engaging wheels (3), extends along a longitudinal axis (A) and is provided with a plurality of walls (5), a floor and a roof (6) delimiting an interior space adapted to accommodate passengers, at least one electric motor configured to provide torque to the ground engaging wheels (3), at least one electric battery module (7) carried by the body (2) and electrically connected to the electric motor, and a support structure (15), which is fixed to the body (2) and is configured to carry the electric battery module (7); the support structure (15) comprises a pair of transversal members (19), which extends transversally to the longitudinal axis (A), are fixed to the body (2) and supports the electric battery module (7); the electric battery module (7) being fixed directly to the transversal members (19) in a removable manner by means of rigid fixing means (20).

## Description

### CROSS-REFERENCE TO RELATED APPLICATIONS

This patent application claims priority from Italian patent application no. 102024000020452 filed on September 13, 2024, the entire disclosure of which is incorporated herein by reference.

### TECHNICAL FIELD

The present invention is related to a public transport vehicle, in particular to a battery electric vehicle (BEV) for public transport.

The present invention finds its preferred, although not exclusive, application in a support structure for mounting the electric battery modules to the body of a public transport vehicle. Reference will be made to this application by way of example below, without however losing in generality.

### BACKGROUND OF THE INVENTION

As is known, public transport vehicles such as buses or coaches are more and more electrified in order to reduce their pollution emissions. Such electrified vehicles comprise one or more electric motors to provide torque to the ground resting wheels and electric battery modules to store the energy to power said electric motors.

In public transport vehicles, it is common to arrange such electric battery modules on the roof of the vehicle, in a dedicated space separated from the environment by a cover. Indeed, such allocation of the electrical battery modules allows a quick intervention in maintenance and rescue operation, allows an easy conditioning and avoid undesired contact in case of collision with ground or other vehicles.

In addition or alternative, some manufacturers locate the batteries in the rear compartment of the vehicle that traditionally houses the internal combustion engine, if provided.

Currently, to support the electric batteries, the aforementioned public transport vehicles comprise complex supporting racks, which are fixed to the body of the vehicles and comprise many metal plates/sheets welded to each other.

In addition, the electric batteries are fixed to such supporting racks by means of elastic bushings or similar mechanical components.

In addition, such supporting racks are further sized so as to be able to accommodate also the electric cables and the cooling tubes connected to the electric batteries and to be able to support the roof cover.

It is clear that the above-described supporting racks are heavy and complex, and they greatly increase the weight and the costs of the related public transport vehicle.

In addition, the assembly of such supporting racks and the battery replacement is complex and time-consuming, with the obvious drawbacks that this entails.

Therefore, the need is felt to allow the fixation of the electrical batteries to the body of a public transport vehicle in a simply, light and economical manner.

In addition, the need is felt to allow the fixation of electrical batteries to the body of a public transport vehicle in a versatile way in order to allow the fixation of batteries of different size and to allow the fixation of the batteries in different positions on the vehicle.

An aim of the present invention is to satisfy the above-mentioned needs in a cost-effective and optimized manner.

### SUMMARY OF THE INVENTION

The aforementioned aims are reached by a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings, wherein:
- Figure 1 is a simplified and perspective view of a public transport vehicle realized according to the present invention, with parts in section and parts removed for clarity,
- Figures 2, 3 and 4 are three perspective views of an upper portion of the vehicle illustrated in Figure 1, with parts is section and removed for clarity,

- Figures 5 and 6 are two cross sections of the upper portion of the vehicle illustrated in Figures 2, 3 and 4, with parts is section and removed for clarity, and

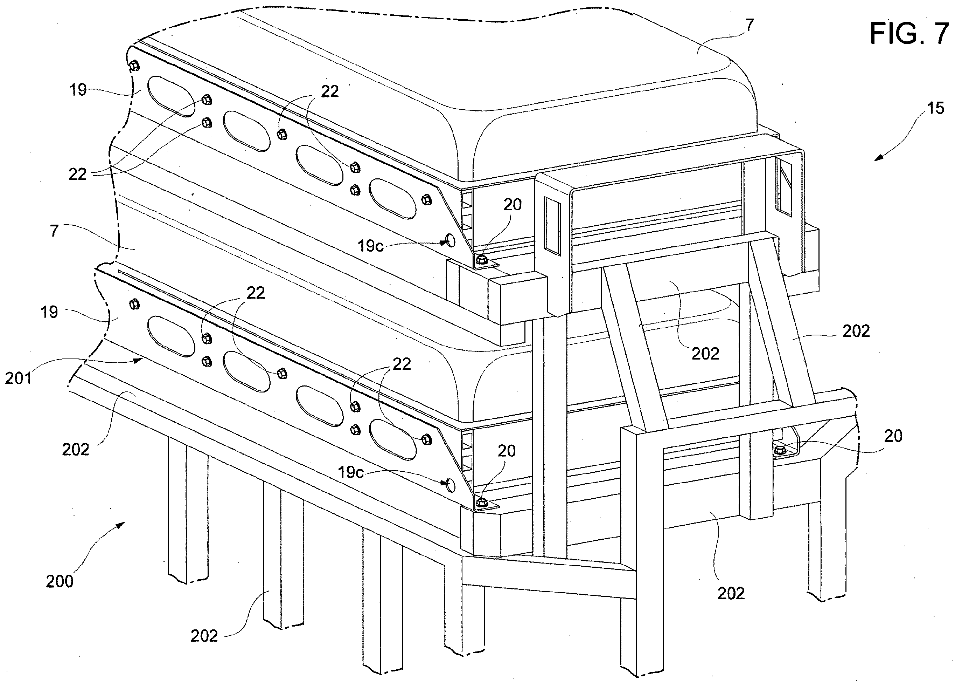

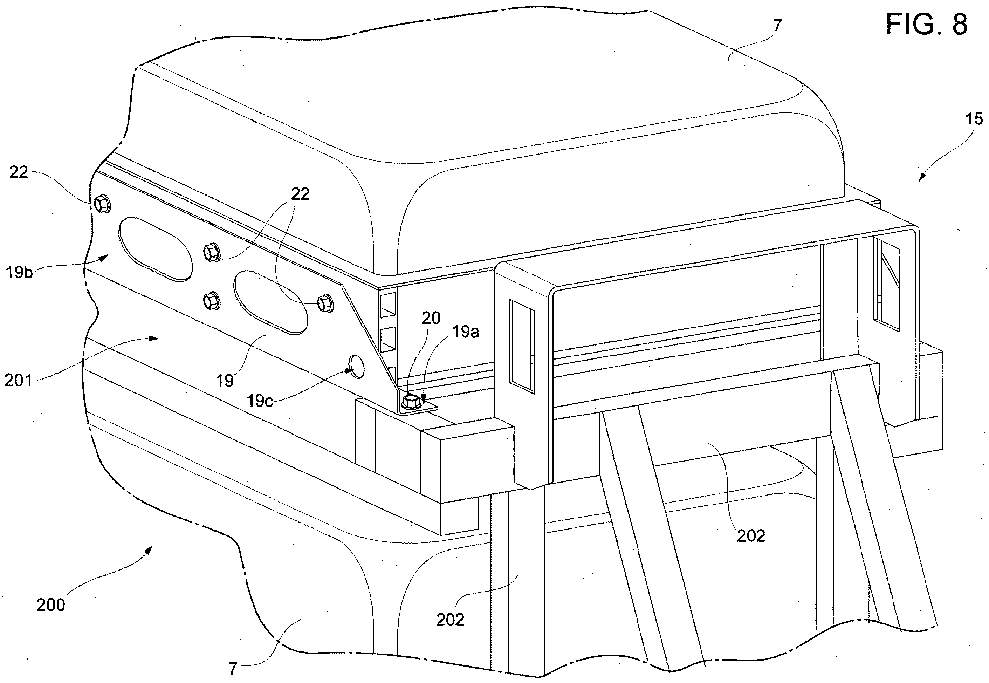

- Figures 7 and 8 are two perspective views of a rear portion of the vehicle illustrated in Figure 1, with parts in section and parts removed for clarity.

### DETAILED DESCRIPTION OF THE INVENTION

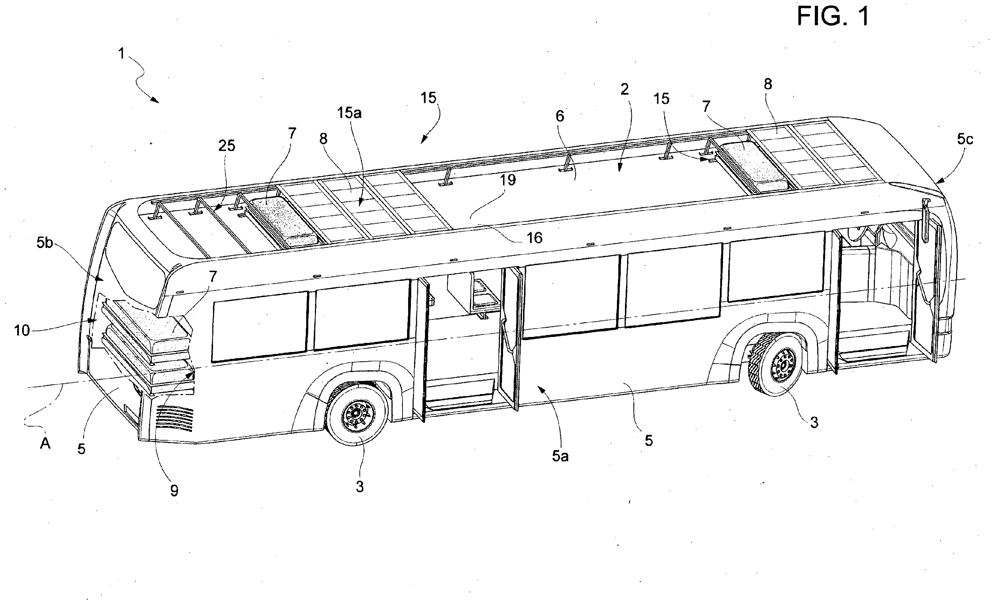

With reference to Figure 1, number 1 denotes, as a whole, a public transport vehicle such as a bus or a coach.

Vehicle 1 comprises a body 2 movable on the ground by means of ground resting means 3, such as wheels. Body 2 extends along a longitudinal axis A. Body 2 comprises a plurality of lateral walls 5, a floor (not visible) and a roof 6 configured to delimit an interior space adapted to accommodate passengers.

More in detail, body 2 preferably comprises a pair of side walls 5a extending parallel to longitudinal axis A facing to each other on opposite sides of the vertical midplane of vehicle 1. In addition, body 2 preferably comprises a rear wall 5b and a front wall 5c extending transversally to longitudinal axis A.

In addition, vehicle 1 preferably comprises at least one operative system/module. Preferably, operative system may comprise an electric motor (not visible) operatively connected to the ground resting wheels 3 and configured to provide torque to these latter to allow motion of vehicle 1 on the ground.

In addition or alternative, said operative system may further comprise an air conditioning system, a rapid rail charging, a pantograph charging system. According to a possible embodiment of the present invention, at least part of the aforementioned operative systems may be positioned on the roof 6 of vehicle 1 in accordance with relevant European regulations and/or in compliance with customer's need.

Vehicle 1 further comprises one or more electrical battery modules 7 electrically connected to operative system to exchange electrical energy with this latter.

In particular, electrical battery module 7 is preferably connected to said electric motor and is configured to exchange electrical energy with the latter.

With reference to Figure 1, electrical battery modules 7 are carried by body 2 so as to be separated from the external environment.

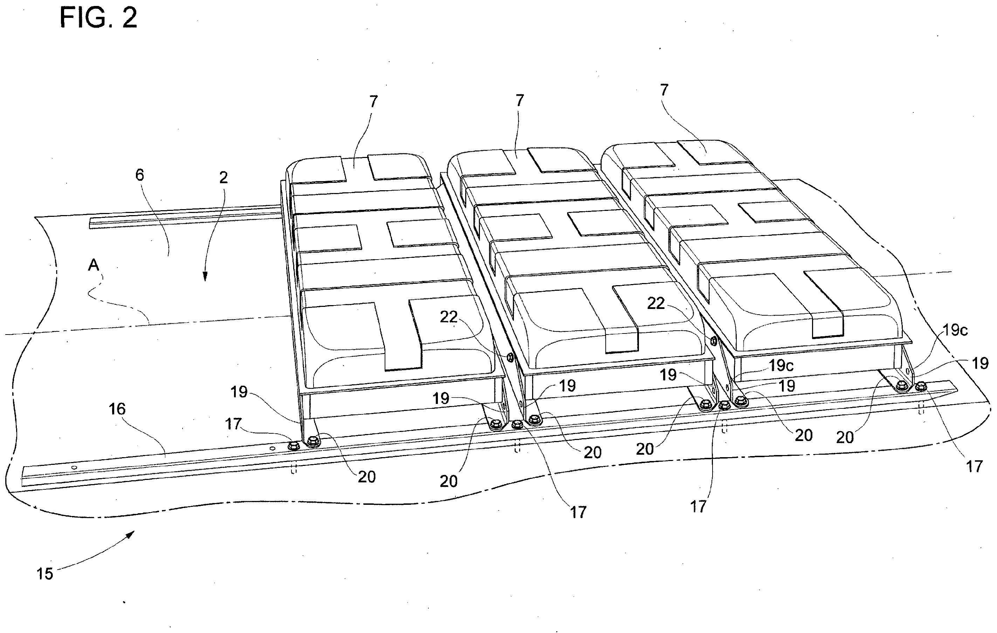

More in detail, with reference to the embodiment illustrated in Figures 2 to 6, electrical battery modules 7 may be arranged on the roof 6 of vehicle 1. In addition, vehicle 1 may further comprise a cover 8 configured to delimit a space adapted to lodge the electrical battery modules 7. The cover 8 may further house electrical and cooling circuit routing operatively connected to electrical battery modules 7 as well. Clearly, the cover 8 may be carried by roof 6 in a manner to separate the space with respect to environment, i.e. to avoid that water or dirty elements may penetrate therein.

In addition, vehicle 1 may be further provided with a compartment 9, which is located on a rear portion of body 2 along longitudinal axis A with respect to the advancing direction of vehicle 1 and is adapted to house the electrical battery modules 7.

More in detail, vehicle 1 preferably comprises an opening 10 to access to compartment 9. Opening 10 is preferably realized on rear wall 5b of vehicle 1.

In addition, opening 10 is preferably adapted to be closed, preferably in a liquid-tight manner, by a panel and/or similar portions of the bodywork of vehicle 1, in order to separate the same compartment 9 from the environment, to avoid that water or dirty elements may penetrate therein. Such panel, in particular, may be a portion of rear wall 5b.

Vehicle 1 further comprises a support structure 15, which is fixed to the body 2 and is configured to carry the electric battery modules 7.

Preferably, support structure 15 has a modular structure and may be sized to carry different numbers of electric battery modules 7.

For example, with reference to the non limitative embodiment illustrated in Figure 1, support structure 15 may comprise a first support structure 15a configured to carry four battery modules 7 (only one visible in Figure 1) and adapted to be arranged on a rear part of roof 6 with respect to the advancing direction of vehicle 1 and a second support structure 15b configured to carry two battery modules 7 (only one visible in Figure 1) and adapted to be arranged on a front part of roof 6.

It is understood that the size of support structure 15 may be adapted on the basis of the number of electric battery modules 7 to be carried.

With reference to the embodiment illustrated in figures 1 to 6, support structure 15 may be arranged on the roof 6.

In addition or alternative, support structure 15 may be arranged within compartment 9, to allow positioning electric battery modules 7 within the same compartment 9.

With reference to the illustrated example and as explained more in detail in the following, support structure 15 has a modular structure and comprises more elements connected to each other.

In particular, support structure 15 comprises two side members 16 fixed to body 2 and extending one spaced aside and parallel to the other.

In particular, side members 16 are preferably located on roof 6 and are arranged parallel to longitudinal axis A, on opposite sides of the vertical midplane of vehicle 1.

Side members 16 are preferably placed in correspondence of a longitudinal corner of vehicle 1, i.e. in correspondence of the junction between roof 6 and a corresponding lateral wall 5, in particular a side wall 5a. Moreover, the side members 16 are preferably equally spaced with respect to longitudinal axis A.

In addition, side members 16 are adapted to be bolted on body 2 preferably without the interposition of elastic bushing or similar damping mechanical components.

More in detail, a spacer 16a is preferably interposed between body 2 and a corresponding side member 16.

This, in use allows to define a small gap between body 2, in particular roof 6, and a corresponding side member 16, to avoid contact between these latter in multiple points due to unevenness or defect on roof 6.

In addition, sealing means 16b such as a gasket are preferably interposed between the side member 16 and the spacer and/or between the spacer and the body 2 to guarantee water tightness between these latter.

In particular, side members 16 are preferably fixed to body 2 in a removable manner via rigid fixing/fastening means 17, advantageously only via rigid fixing/fastening means 17. Rigid fixing means 17 are preferably realized in metallic material and they may comprise screws, nuts, bolts, washers and/or similar mechanical components.

Preferably, side members 16 are fixed to body 2 via a plurality of fixing means 17 arranged equally spaced along the same side member 16.

Side members 16 preferably comprises a rectilinear profiled section bar and are preferably realized in steel, stainless steel and/or other similar metallic materials.

Moreover, side members 16 have preferably a monolithic structure.

In addition, side members 16 have preferably a substantially constant cross-section.

More in detail, side members 16 are preferably tubular in shape and they may have a rectangular,square or similar cross section.

Alternatively, side members 16 may have an open cross section, such as a L-shaped, a C-shaped or similar cross section.

With reference to the preferred embodiment of the invention, support structure 15 and in particular side members 16 are fixed to the chassis of vehicle 1, in particular to vertical uprights of the chassis of vehicle 1 belonging to the side walls 5a on the same vehicle 1.

More in detail, chassis of vehicle 1 preferably comprises a plurality of vertical uprights (not illustrated) extending in pairs facing to each other on opposite sides of the vertical midplane of vehicle 1.

Support structure 15, and in particular side members 16, is preferably fixed to such to the top end of such vertical uprights, preferably by means of brackets extending cantilevered from the top end of the same vertical uprights toward the vertical midplane of the vehicle 1.

In other words, support structure 15, and in particular side members 16, is not directly fixed to roof 6.

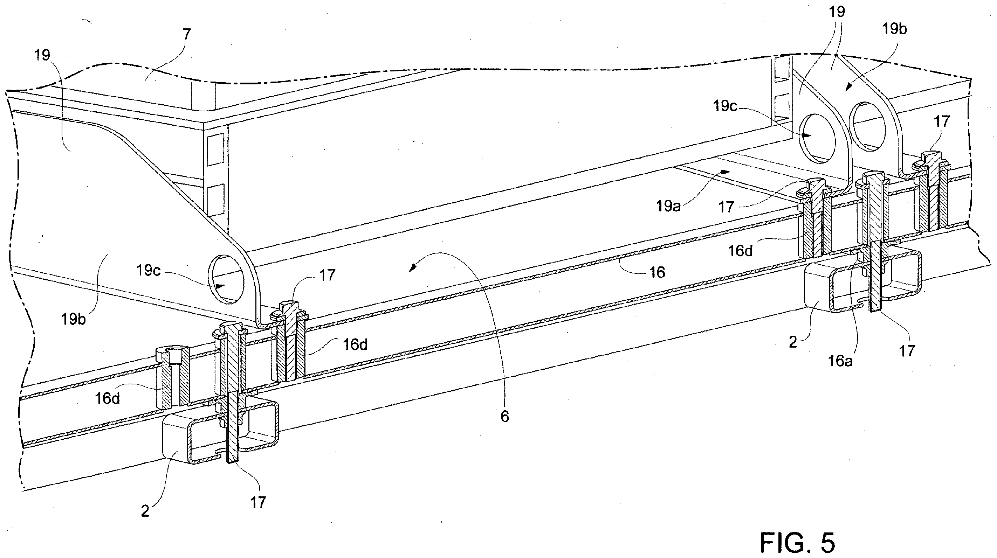

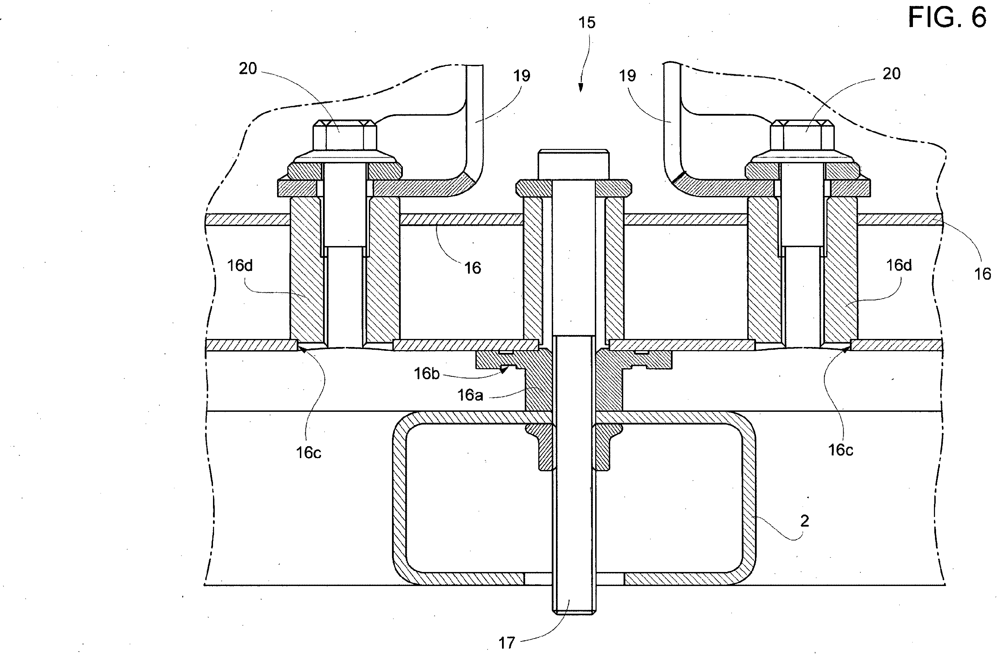

With reference to the example illustrated in Figures 5 and 6, side members 16 are preferably equipped with a plurality of through openings 16c extending substantially in a vertical direction.

In addition, side members 16 are preferably equipped with a plurality of internally hollow connecting elements 16d, which are preferably tubular in shape and are housed within a corresponding through opening 16c. Connecting elements 16d are preferably cylindrical in shape and may comprise bushings or similar mechanical components.

Moreover, connecting elements 16d are preferably provided with an internally threaded through hole/bore.

Preferably, connecting elements 16d are rigidly fixed, for instance by welding, to the side members 16, in particular within a corresponding through opening 16c, such that their axis is coaxial with the axis of the corresponding through opening 16c.

In addition, support structure 15 preferably comprises a plurality of transversal members 19 connected between two side members 16 and extending transversally to the same side members 16. More in detail, transversal members 19 preferably extends astride the two side members 16. The transversal members 19 are preferably spaced one aside the other along and in the direction of the length of the side members 16.

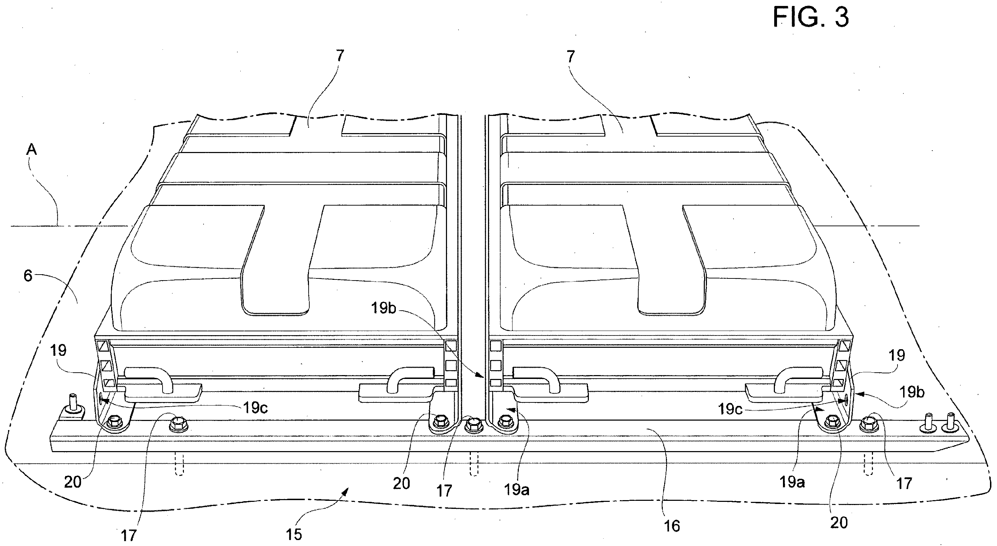

With reference to the example illustrated in figures 2 and 3, transversal members 19 are arranged transversally, in particular orthogonally, to longitudinal axis A and are spaced one aside the other along longitudinalaxis A.

In particular, transversal members 19 extend preferably equally spaced one with respect to the other along longitudinal axis A and above the side members 16.

More in detail, the two opposite ends of transversal members 19 are connected to the two side members 16.

In addition, transversal members 19 are preferably fixed to body 2, in particular to side members 16, in a removable manner only by means of rigid fixing means 20. Rigid fixing means 20 preferably are realized in metallic material and they may comprise screws, nuts, bolts, washers and/or similar mechanical components.

In particular, transversal members 19 are adapted to be bolted on side members 16, preferably directly and without the interposition of elastic bushing or similar damping mechanical components.

More in detail, each transversal member 19 is preferably fixed astride to the two side members 16 by means of two fixing/fastening means 20 arranged at the opposite ends of the same transversal member 19 and connected to a respective side member 16, advantageously only via rigid fixing/fastening means 20.

In particular fixing means 20 are preferably fixed to corresponding connecting element 16d.

The distance between two adjacent bushings 16 on the same side member 16 correspond to the center distance between two fixing means 20 present on adjacent transversal members 19 utilized for mounting individual electrical battery module 7.

The connecting elements 16d align on axis perpendicular to the longitudinal axis on the horizontal plane of the vehicle after the side members 16 are mounted on the side wall 5a extending one spaced aside and parallel to the other.

Transversal members 19 preferably comprises a rectilinear profiled section bar and are preferably realized in steel, stainless steel and/or other similar metallic materials.

Moreover, transversal members 19 have preferably a monolithic structure.

In addition, transversal members 19 have preferably a substantially constant cross-section.

More in detail, transversal members 19 have preferably an open cross section. In particular, side members 19 have preferably a L-shaped cross-section.

In addition, the length of side members 19 is preferably lower than the width of vehicle 1, along a direction orthogonal to longitudinal axis A.

Making reference to the example of Figures 2 and 3, each transversal member 19 preferably comprises a fixing portion 19a configured to be fixed to the side members 16 and a cantilevered portion 19b extending along vertical direction, preferably vertically, from fixing portion 19a.

More in detail, the fixing portion 19a is preferably a plane wall or plate-shaped wall extending substantially horizontally.

The cantilevered portion 19b is preferably a plane wall or plate shaped wall extending substantially vertically, in a direction orthogonal to the fixing portion 19a.

Each fixing portion 19a is preferably fixed to the side elements 19 by means of the fixing means 20, in particular by means of two fixing means 20 arranged on opposite sides of the same fixing portion and connected to a corresponding side member 16.

In addition, the transversal members 19 are fixed on pairs on the side members 16 so that the fixing portions 19a of the pair of transversal members 19 are arranged facing each other.

The electric battery modules 7 are preferably fixed to the transversal members 19.

More in detail, each electric battery module 7 is preferably fixed to two adjacent transversal members 19, in particular to a pair of transversal members 19 facing to each other.

Preferably, each battery module 7 is preferably arranged resting on the fixing portion 19a of two adjacent transversal elements 19a.

Moreover, the electric battery modules 7 are preferably fixed on transversal members 19, preferably directly and without the interposition of elastic bushing or similar damping mechanical components.

In particular, battery modules 7 are preferably fixed to transversal members 19 in a removable manner via rigid fixing /fastening means 22, advantageously only via rigid fixing/fastening means 22. Rigid fixing means 22 are preferably realized in metallic material and they may comprise screws, nuts, bolts, washers and/or similar mechanical components.

More in detail, battery modules 7 are preferably fixed by means of fixing means 22 to cantilevered portion 19b of transversal elements 19.

With reference to the example illustrated in Figure 3, are preferably provided with openings, holes or eyelet 19c configured to be engaged during the transportation of battery modules 7.

More in detail, openings 19c are preferably realized on cantilevered portion 19b and are configured to be engaged for instance by hooks or other similar implement to allow removal from of battery module 7 from chassis 2, placement of battery module 7 on the same chassis and/or transportation of the battery modules 7.

Preferably, openings 19c are realized adjacent to the axial ends of corresponding cantilevered portion 19b.

More in detail, each cantilevered portion 19b preferably comprises a pair of openings 19c, one at each axial end of the same cantilevered portion 19b.

In view of the above description, support structure 3 is a three-level assembly:
a) Structure level 3: the electric battery module 7 mounted on two transversal members 19 by means of fastening means 22;
b) Structure level 2: structure level 3 mounted on two side members 16 by means of fastening means 20; and
c) Structure level 1: structure level 2 mounted on body 2 by means of fastening means 17.

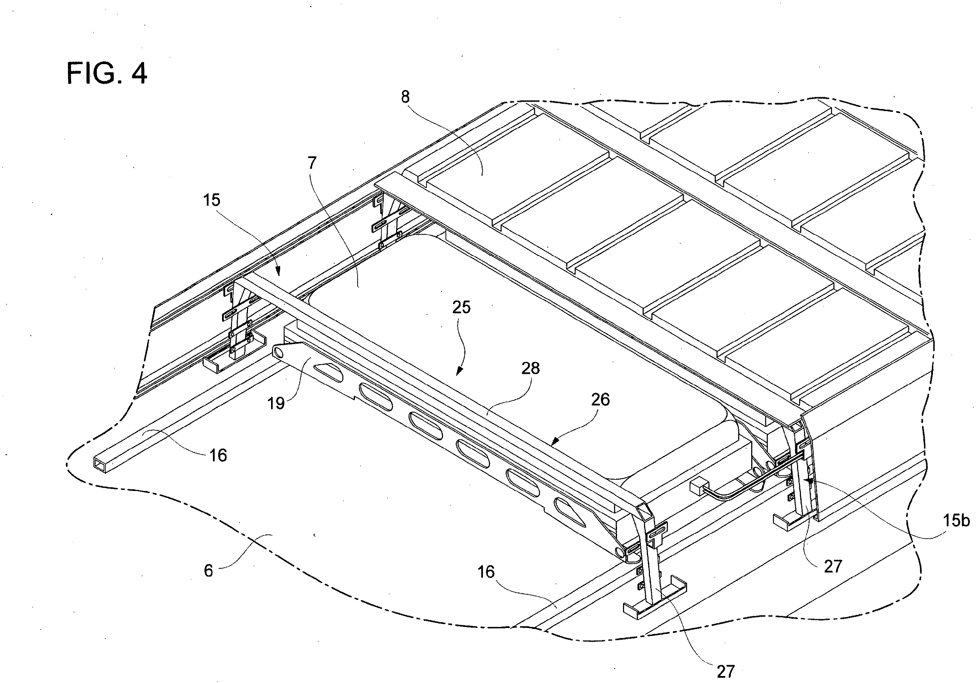

With reference to the example illustrated in Figure 4, vehicle 1 preferably further comprises a support structure 25, separate and distinct from support structure 15, adapted to carry the cover 8.

More in detail, support structure 25 preferably comprises a plurality of hoops 26 extending transversally with respect to longitudinal axis A and spaced one with respect to the over along longitudinal axis A. The hoops 26 are connected to body 2 and carry the cover 5.

In particular, hoops 26 each comprises a pair of T-shaped brackets 27 connected to the body 2, on opposite sides of the vertical midplane of vehicle 1 and a transversal member 28 connected to the brackets 27, above a corresponding electric battery module 7. More in detail, transversal members 28 preferably extends astride the two brackets 27.

The two T-shaped brackets 27, in addition, are preferably fixed to the outside of a corresponding electric battery module 7 with respect to the vertical midplane of vehicle 1.

The operation of the embodiment of the invention as described above is the following.

To fix the electric battery modules 7 on body 2, first each electrical battery module 7 is bolted to the transversal elements 19 by means of fixing means 22, then the assembly comprising electrical battery module 7 bolted to the transversal elements 19 is fixed to the side members 16 by means of rigid fixing means 20 on a tool preparation table, and lastly the assembly comprising side members 16, transversal members 19 and electrical battery module 7 is fixed to chassis 2, in particular to roof 6 by means of rigid fixing means 17. Preferably, said spacer are pre-positioned on chassis 2, in particular on roof 6, before the positioning of the assembly comprising side members 16, transversal members 19 and electrical battery module 7.

As shown in figures, the elements of the support structure 15 can be assembled on the body 2 in order to regulate their positioning in function of the size and number of electric battery modules to be installed on vehicle 1.

In view of the foregoing, the advantages of vehicle according to the invention are apparent.

Thanks to the proposed support structure, it is possible to install the electric battery modules 7 on the body 2 of the vehicle in an easy and quick manner.

In addition, the production of the support structure 15 is greatly simplified, because only simple off-the-shelf components easily available for the vehicle 1 manufacturer are used.

The above entails a great save in cost for the vehicle production and a great save in time for any maintenance operation or replacement of the battery module.

In addition, the dimensions of the support structure 15 may be easily adapted to the size of the electric battery modules 7, thereby allowing to easily install electric battery modules 7 of different size. The support structure 15 provides a weight optimization for the vehicle whilst serving its primary function of carrying the weight load and inertia of the battery module 7 in static and dynamic conditions.

The support structure is fixed strategically with the side wall 5a from of load/force transmission standpoint on the overall body 2.

The assembly of the support structure 15 to side wall 5a using spacers results in a force transmission bypassing the roof 6 as it transfers through the side wall 5a towards the chassis of the vehicle.

This force transmission scheme prevents heavy additional rigidification and weight increase of the roof 6 as would be necessary to support the load of the supporting structures if they were to be fixed directly.

The support structure 15 design in its principle permits the vehicle 1 architecture to dissociate the cover 8 and the related support structure 25 necessary for functioning of the electric battery modules 7 (he hydraulic and electrical routing) from the same supporting structure 15.

This provides the possibility to optimize and or reduce the load on the vehicle as the infrastructure shall be positioned and the routing shall be implemented in a unique fashion to adapt to the battery module positioning. Consequently, this strategy provides an opportunity to mount architecture on a need-only basis to save mass and material cost for various configurations of vehicle 1 as prescribed by client.

The use of systematic and repeatable kits and sub structures which make up the supporting structure 15a and 15b provides a wide range of liberty for battery module positions to fulfill he end-user's electrical energy capacity requested.

This modular and scalable concept provides an opportunity to configure the vehicle's -weight distribution and center of gravity to optimize / generate the best possible passenger capacity scenario for the electrical energy capacity requested by the end user.

Elastomer bushings or dampers are employed by bus manufacturers on roof 6 to compensate for a lack of flatness and coplanarity of the mounting points for the battery module 7.

With the presence of the connecting elements 16d on side members 16, the four points of fixation needed to mount the side members 19 and the electric battery modules 7 are coplanar and in accordance with the mounting flatness requirement of the battery module 7 avoiding the use of the aforementioned elastic bushings.

Support structure 15 is also lighter than the support structure used in current production vehicles.

In addition, the support structure 15 is rather compact and allows to install the electric battery modules 7 as close to the roof 6 as possible.

The above further allows to lower as much as possible the position of the center of gravity of vehicle 1.

Similarly to the above, the support structure 15 can be used in different typologies of vehicles, thereby providing a scale economy in manufacturing the aforementioned vehicles.

It is clear that modifications can be made to the described vehicle which do not extend beyond the scope of protection defined by the claims.

For example, the disposition, number, shape and material of the support structure 15 elements may vary according to the need of the vehicle.

Indeed, different disposition, shape and numbers of support structure 15 elements may be chosen according to the typology of electrical battery modules 7.

In addition, the proposed support structure 15 allows to simplify the replacement of battery modules 7, as it is sufficient to remove the four screws 20 to separate transversal members 19 from side members 16 and therefore separate battery modules 7 from chassis 2.

This further allows to avoid losing any water tightness of roof 6, since it is not necessary to remove screws 17 which link side members 16 to the roof 6.

In addition, Figures 4 and 5 illustrate an alternative embodiment of the present invention, in which is similar to the embodiment illustrated in Figures 2 and 3 and in which the common components will be denoted with the same reference number.

According to the embodiment illustrated in Figures 4 and 5, electric battery modules 7 may be arranged within compartment 9 of vehicle 1.

Support structure 15 may be sized to be arranged within compartment 9 of vehicle 1 and may be adapted to be interposed between body 2 and electric battery modules 7, in order to allow mounting the same electric battery modules 7 to body 2.

More in detail, body 2 may comprise a portion 200 that is arranged within compartment 9 and is shaped so as to define at least one seat 201 to accommodate a corresponding electric battery module 7.

With reference to the example illustrated in Figures 4 and 5, portion 200 is preferably shaped so as to define two seats 201 spaced one above the other along a vertical axis.

Portion 200 is further shaped so as to allow to insert within and to extract electric battery modules 7 from seat 201 along longitudinal axis A.

In other words, portion 200 is shaped so as to define a front opening that allows to insert within and to extract electric battery modules 7 from seat 201

In particular, portion 200 has preferably a frame-like structure and comprises a plurality of section bars 202 connected to each other, for example welded to each other.

In other words, portion 200 preferably comprises a metal framing configured to define the at least one seat 201 adapted to accommodate the electric battery module 7.

More in detail, portion 200 preferably comprises a plurality of section bars 202, which are preferably realized in metallic material and extend alternatively along a horizontal direction and along a vertical direction, and shaped so as to define the at least one seat 201.

Support structure 15 is preferably connected to section bars 201 via fixing means preferably realized in metallic material, such as screws, nuts, bolts, washers and/or similar mechanical components.

More in detail, according to the embodiment illustrated in Figures 4 and 5, support structure 15 may not comprise side members 16, and transversal members 19 are fixed directly to portion. 200 of body 2 via fixing means 20 in a removable manner.

More in detail, transversal members 19 are fixed to horizontal section bars 202 of body 2.

In addition, transversal members 19 are preferably arranged transversally, in particular orthogonally, to longitudinal axis A and are spaced in pairs along the same longitudinal axis A.

## Claims

1. A vehicle (1) for public transport comprising:
• a body (2), which is movable on the ground by means of ground engaging means (3), extends along a longitudinal axis (A) and is provided with a plurality of walls (5), a floor and a roof (6) delimiting an interior space adapted to accommodate passengers,
• at least one operative system,
• at least one electric battery module (7) carried by said body (2) and electrically connected to said operative system to exchange electric energy with this latter, and
• a support structure (15), which is fixed to said body (2) and is configured to carry said electric battery module (7),
said support structure (15) comprising at least a pair of transversal members (19), which extend transversally to said longitudinal axis (A), are fixed to said body (2) in a removable manner by means of first rigid fixing means (20) and supports said electric battery module (7),
said electric battery module (7) being fixed to said transversal members (19) in a removable manner by means of second rigid fixing means (22),
**characterized in that** said transversal members (19) comprise each an L-shaped profiled section bar and have a monolithic structure.

2. Vehicle according to claim 1, wherein said electric battery modules (7) are directly fixed on said transversal members (19) by means of said second rigid fixing means.

3. Vehicle according to claim 2, wherein said electric battery modules (7) are directly fixed on said transversal members (19) without the interposition of elastic bushing or similar damping mechanical components.

4. Vehicle according to claim 1, 2 or 3, wherein said transversal members (19) comprises a fixing portion (19a) fixed in a removable manner to said body (2) by means of said first rigid fixing means (20) and a cantilevered portion (19b) extending along a vertical direction from said fixing portion (19a),
said electric battery modules (7) being fixed in a removable manner to said cantilevered portion (19a) by means of said second fixing means (22).

5. Vehicle according to claim 4, wherein said electric battery module is fixed to said body (2) so that said fixing portions (19a) are arranged facing each other.

6. Vehicle according to any of the preceding claims, wherein said support structure (15) further comprises a pair of side members (16), which are arranged on said roof (6) and extends parallel to said longitudinal axis (A) on opposite sides of the vertical midplane of said vehicle (1), each of said transversal members (19) being fixed to said side members (16) astride said longitudinal axis (A) in a removable manner by means of said first rigid fixing means (20).

7. Vehicle according to claim 6, wherein said side members (16) are fixed to said body (2) in a removable manner by means of third rigid fixing means (17).

8. Vehicle according to claim 7, wherein said side members (16) are bolted directly on said body (2) by means of third rigid fixing means (17) without the interposition of elastic bushing or similar damping mechanical components.

9. Vehicle according to claim 6, 7 or 8, wherein the two opposite ends of the two transversal members (19) are each fixed to a corresponding side member (16).

10. Vehicle according to any of claims 6 to 9, wherein said side members (16) are equipped with a plurality of through openings (16c) extending substantially in a vertical direction and with a plurality of internally threaded connecting elements (16d), which are housed within a corresponding through opening (16c) and are adapted to be coupled to said first rigid fixing means (20).

11. Vehicle according to claim 10, wherein said internally threaded connecting elements (16d) are rigidly fixed to said side members (16) by means of welding.

12. Vehicle according to any of claims 6 to 11, wherein said side members (16) comprise each a profiled section bar tubular in shape and have a monolithic structure.

13. Vehicle according to any of claims 6 to 12, wherein said transversal members (19) are bolted directly on said side members (16) by means of said first fixing means.

14. Vehicle according to any of claims 1 to 4, further comprising a compartment (9), which is located on a rear portion of said body (2) along said longitudinal axis (A) with respect to an advancing direction of said vehicle (1) and is adapted to house said electrical battery modules (7).

15. Vehicle according to claim 14, wherein said support structure (15) is arranged within said compartment (9) and carries said electric battery module (7) within said compartment (9).

16. Vehicle according to claim 14 or 15, wherein said body (2) comprises a portion (200), which is arranged within said compartment (9), is shaped so as to define at least one seat (201) adapted to accommodate said electric battery module (7), and has a frame-like structure,
said transversal members (19) being fixed directly to said portion (200) in a removable manner by means of said first fixing means (20).
